# EUROPÄISCHE PATENTSCHRIFT

(11) **EP 0 530 475 B1**
(45) Veröffentlichungstag und Bekanntmachung des Hinweises auf die Patenterteilung: **01.10.1997**
(21) Anmeldenummer: 92112069.7
(22) Anmeldetag: 15.07.1992
(51) Int. Cl.: B60G 17/015, G01P 3/52

(54) **Sensor in einem Schwingungsdämpfer für Kraftfahrzeuge**
Sensor in a damper for motor vehicles
Capteur dans un amortisseur pour véhicules à moteur

(30) Priorität: 12.08.1991 DE 4126586
(43) Veröffentlichungstag der Anmeldung: 10.03.1993
(73) Patentinhaber: Krupp Bilstein GmbH, 58256 Ennepetal (DE)
(72) Erfinder: Gesenhues, Ludger, Dipl.-Ing., W-5810 Witten (DE); Hölscher, Reinhard, Dr.-Ing., W-4796 Salzkotten (DE); Hoffmann, Hans-Jürgen, W-5600 Wuppertal 12 (DE); Huang, Zhen, Dr.-Ing., W-5830 Schwelm (DE); Schmidt, Klaus, Dipl.-Ing., W-5060 Bergisch-Gladbach 2 (DE)
(74) Vertreter: John, Ernst

(56) Entgegenhaltungen:
- EP-A- 486 848
- DE-C- 3 909 190
- DE-U- 8 524 086
- FR-A- 2 573 200
- GB-A- 2 094 068
- GB-A- 2 098 007
- US-A- 4 949 573

## Beschreibung

Die Erfindung bezieht sich auf einen Sensor zur Messung der Relativgeschwindigkeit zwischen einem Dämpferzylinder und einem mit einer Kolbenstange verbundenen, sich in diesem bewegenden Dämpferkolben eines Schwingungsdämpfers für Kraftfahrzeuge, bestehend aus einem Dauermagneten und einer mit dem Dauermagneten zusammenwirkenden, als zylindrische Spule ausgebildeten Sensorwicklung, wobei der Dauermagnet (5) als Ringmagnet ausgebildet ist und direkt oder indirekt mit dem einen der relativ zueinander bewegenden Teile die Sensorwicklung direkt oder indirekt mit dem anderen der relativ zueinander bewegenden Teile in Verbindung stehen, wobei das den Dauermagneten (5) tragende Teil und das die Sensorwicklung (7) tragende Teil für das Magnetfeld des Dauermagneten einen geschlossenen magnetischen Kreis bilden, und bei dem der magnetische Fluß von der Sensorwicklung geschnitten wird und in dieser eine Spannung induziert.

Derartige Schwingungsdämpfer werden als Bindeglieder zur Übertragung der Schwingungen von der Fahrbahnoberfläche über das Rad-Federsystem auf die Karosserie eingesetzt, wobei insbesondere steuer- bzw. regelbare hydraulische Schwingungsdämpfer zum Einsatz kommen, die einen hohen Fahrkomfort als auch eine größtmögliche Fahrsicherheit gewährleisten.

Für die Regelung der Dämpfungskraft eines Schwingungsdämpfers zum Beispiel in Abhängigkeit des Fahrbahnzustandes werden verschiedene Bewegungsgrößen wie Relativgeschwindigkeit zwischen Aufbaumasse und Radmasse oder die Aufbaubeschleunigung gemessen.

Die deutsche Patentschrift DE PS 39 09 190 beschreibt einen im Schwingungsdämpfer integrierbaren Sensor zur Messung der Relativgeschwindigkeit in Betrag und Richtung zwischen Aufbau- und Radmasse, bestehend aus einer an oder in der Wandung des mit der Kolbenstange verbundenen Schutzrohrs befindlichen Sensorwicklung und einem im Führungsverschluß des Dämpferzylinders angeordneten Dauermagneten. Bei auftretenden Fahrbahnunebenheiten wird durch den magnetischen Fluß des Dauermagneten und die relative Bewegung des Dauermagneten in der Sensorwicklung eine Spannung induziert, die als Meßsignal für die Relativgeschwindigkeit zwischen Dämpfungskolben und Dämpferzylinder und damit zwischen Aufbauund Radmasse dient.

Dieser Sensor hat jedoch den Nachteil, daß das die Sensorwicklung tragende Schutzrohr aus einem nichtmagnetischen Material besteht oder die Sensorwicklung als Schutzrohr dient, indem die Wicklung aus einer Luftspule gewickelt und mit einem Kunststoff umspritzt ist. Durch diesen Aufbau wird nur eine geringe Anzahl der vom Dauermagneten ausgehenden magnetischen Kraftlinie von der Sensorwicklung geschnitten und die in der Wicklung induzierte Spannung kann nicht als genaues Maß für die Relativgeschwindigkeit zwischen Aufbau- und Radmasse verwendet werden.

Die GB 2 098 007 A zeigt einen in einem Schwingungsdämpfer integrierten Sensor, bei dem ebenfalls der Magnet an der Kolbenstangenführung und die Sensorwicklung auf der Innenseite des mit der Kolbenstange verbundenen Schutzrohres angeordnet sind. Die Sensorwicklung weist hierbei unterschiedliche Querschnitte auf, um die sogenannten "Endeffekte", die beim Richtungswechsel der Bewegung entstehen, zu kompensieren. Die direkte Verbindung des Magneten mit den magnetisch leitenden Teilen des Führungsverschlusses ergeben zusammen mit der vorgesehenen Polarisierung eine mehrfache und sehr scharfkantige Umlenkung der Flußlinien, wodurch sich bei schneller Bewegung ebenfalls als Nachteil eine Instabilität in den Messungen einstellen kann.

Die US A 4,949,573 zeigt ein Sensorsystem, bei dem sowohl die Sensorwicklung als auch der Magnet in einem den Dämpfungszylinder übergreifenden Schutzrohr angeordnet ist, wobei die Induktivitätsänderung gemessen wird, die durch die Relativbewegung zwischen Zylinder und Schutzrohr sich in der Sensorwicklung ergibt. Auch das hier entstehende Signal weist den Nachteil auf, daß ein genaues Maß für die Relativgeschwindigkeit zwischen Aufbau- und Radmasse nicht abgegriffen werden kann, da die Deutlichkeit des Signals dadurch geschwächt wird, daß nicht der Magnet relativ zur Wicklung bewegt wird, sondern lediglich die den magnetischen Fluß leitenden Bauteile ineinander verschoben werden und sich somit die Länge der "Leitungswege" ändert.

Die EP 486 848 A1, welche neben der im vorliegenden Patent beanspruchten Priorität zwei weitere ältere Prioritäten beansprucht und in deren Rahmen als Stand der Technik nach Artikel 54(3) und (4) EPÜ gilt, offenbart im Umfang dieser zwei älteren Prioritäten ebenfalls ein Sensorsystem, bei dem ein Dauermagnet an der Kolbenstange zwischen Führungspaket und Kolben angeordnet ist und zusammen mit einer innerhalb oder außerhalb der Zylinder angeordneten Sensorwicklung ein Sensorsystem bildet.

Ein Nachteil dieses Systems, welcher ebenfalls zu mangelnder Genauigkeit in der Messung der Relativgeschwindigkeit führt, ist die Ausbildung langer Zwangswege für den magnetischen Fluß sowie eine Instabilität der Messung in der Nähe der Umkehrpunkte der Bewegung.

Die Aufgabe der Erfindung ist es, einen Sensor zur Messung der Relativgeschwindigkeit zwischen Dämpfungskolben und Dämpferzylinder zu schaffen, bei dem die in der Sensorwicklung induzierte Spannung einen sehr genauen Meßwert proportional der Relativgeschwindigkeit darstellt und damit als Istwert für die Regelung der Dämpfungskraft des Schwingungsdämpfers verwendbar ist.

Die Aufgabe wird durch die kennzeichnenden Merkmale des Anspruchs 1 gelöst, wobei die Unteransprüche vorteilhafte Ausführungen darstellen.

Hierbei ist der Dauermagnet in Anordnung zur Kolbenstange 3 radial polarisiert und Die Kolbenstange 3 besteht aus einem ferromagnetischen Material.

Ein sehr genaues Spannungssignal proportional zur Relativgeschwindigkeit zwischen Dämpfungskolben und Dämpferzylinder erhält man, wenn der radial zur Kolbenstange polarisierte Dauermagnet durch ein nichtferromagnetisches Material vom Dämpferzylinder getrennt auf dem Führungsverschluß desselben aufliegt. Besteht der Dämpferzylinder selbst aus einem nichtferromagnetischen Material, zum Beispiel Aluminium, kann der Dauermagnet auch im Führungsverschluß integriert sein. Da das die Sensorwicklung an seiner Innenwandung tragende Schutzrohr ebenfalls aus ferromagnetischem Material besteht, verläuft der magnetische Fluß über den radial polarisierten Dauermagneten, die Kolbenstange und das Schutzrohr und wird senkrecht von der Sensorwicklung geschnitten, wodurch in dieser ein Spannungssignal proportional der Relativgeschwindigkeit induziert wird. Magnetische Streuflüsse, die zu einer Ungenauigkeit des Meßergebnisses führen können, treten nicht auf.

Das gleiche genaue Meßergebnis läßt sich auch bei einem Schwingungsdämpfer erreichen, bei dem die Sensorwicklung unterhalb des Anschlagpuffers um die Kolbenstange angeordnet ist und der radial polarisierte Dauermagnet sich an der innenwandung des Dämpferzylinders befindet, wobei auch die umgekehrte Anordnung, daß die Sensorwicklung an der Wandung des Dämpferzylinders und der Dauermagnet unterhalb des Anschlagpuffers an der Kolbenstange angeordnet ist, denkbar ist. Hier wird der geschlossene Kreis für den magnetischen Fluß über den Dauermagneten, die Kolbenstange, den Dämpferzylinder und den Dämpfungskolben gebildet. Besteht der Dämpfungskolben aus einem nichtferromagnetischen Material kann der magnetische Kreis über den Führungsverschluß geschlossen werden.

Wenn sich die Sensorwicklung an der Außenwandung des Dämpferzylinders befindet, muß dieser jedoch aus einem nichtferromagnetischen Material bestehen und die Sensorwicklung mit einer äußeren ferromagnetischen Umhüllung versehen sein.

Bei Zweirohrschwingungsdämpfern umgibt den Dämpferzylinder ein Außenzylinder. Hier kann entweder der Dauermagnet oder die Sensorwicklung im Ausgleichsraum des Schwingungsdämpfers entweder an der Außenwandung des aus nichtmagnetischen Material bestehenden Dämpferzylinder oder an der Innenwandung des Außenzylinders angeordnet werden.

Weiterhin besteht auch beim Zweirohrschwingungsdämpfer die Möglichkeit, die Sensorwicklung an der Außenwandung des Außenzylinders anzuordnen und mit einer ferromagnetischen Umhüllung zu versehen. Allerdings muß dann der Außenzylinder aus nichtmagnetischen Material bestehen.

Nachfolgend soll die Erfindung an einem Ausführungsbeispiel näher erläutert werden. Die zugehörigen Zeichnungen zeigen:
- Fig. 1: Ausschnitt aus einem Schwingungsdämpfer mit Sensorwicklung am Schutzrohr,
- Fig. 2: Verlauf der induzierten Spannung in Abhängigkeit der Relativgeschwindigkeit,
- Fig. 3: Schwingungsdämpfer mit einer Sensorwicklung am Dämpferzylinder und einem Dauermagneten an der Kolbenstange,
- Fig. 4: einem Schwingungsdämpfer mit einem Sensor, bei dem die Sensorwicklung auf dem Dämpferzylinder aufgebracht ist und der Dauermagnet sich in der Abdeckung befindet,
- Fig. 5: Einrohr-Federbein mit einer Sensorwicklung um die Kolbenstange und einem Dauermagneten an der Innenwandung des Dämpferzylinders,
- Fig. 6: ein Zweirohr-Federbein mit einem Sensor, bestehend aus der die Kolbenstange umgebenden Sensorwicklung und einem mit dem Dämpferzylinder verbundenen Dauermagneten,
- Fig. 7: ein Zweirohr-Federbein mit einem Sensor, bestehend aus der an der Außenwandung des Dämpferzylinders angeordneten Sensorwicklung und einem mit der Kolbenstange verbundenen Dauermagneten.

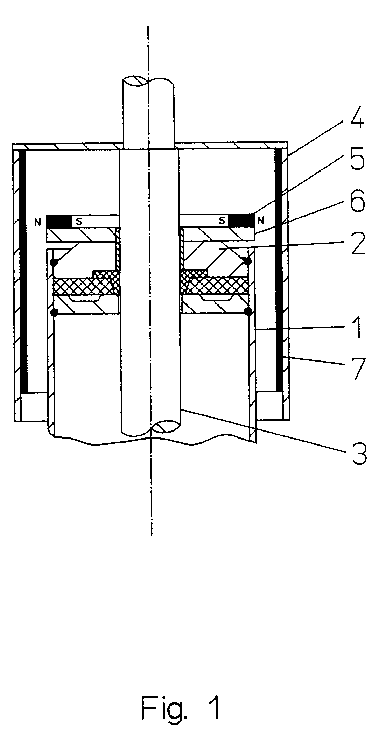

Der in Fig. 1 im Ausschnitt dargestellte hydraulische Schwingungsdämpfer besteht im wesentlichen aus einem Dämpferzylinder 1, der durch einen Führungsverschluß 2 verschlossen ist, einer im Dämpferzylinder 1 geführten aus Stahl bestehenden Kolbenstange 3, die an ihrem unteren Ende einen nicht dargestellten Dämpfungskolben trägt, und einen über den Dämpfungszylinder 1 gestülpten, einseitig offenen Schutzrohr 4. Der in dem Schwingungsdämpfer integrierte Relativgeschwindigkeitssensor besteht aus einem radial zur Kolbenstange 3 polarisierten Ringmagneten 5, der durch eine Scheibe 6 aus nichtmagnetisierbaren Material, zum Beispiel Aluminium, magnetisch von den üblicherweise aus Stahl bestehenden Dämpferzylinder 1 getrennt ist. Bei einem Dämpferzylinder und einem Führungsverschluß 2 aus Aluminium kann diese Scheibe 6 wegfallen, der Dauermagnet 5 kann dann im Führungsverschluß 2 integriert sein. Die mit dem Dauermagneten 5 zusammenwirkende Sensorwicklung 7 wird an der Innenwandung des aus einem ferromagnetischen Material, üblicherweise aus Stahl bestehenden Schutzrohr 4 angeordnet, wobei sie sich über die gesamte Länge der Seitenwandung erstrecken kann.

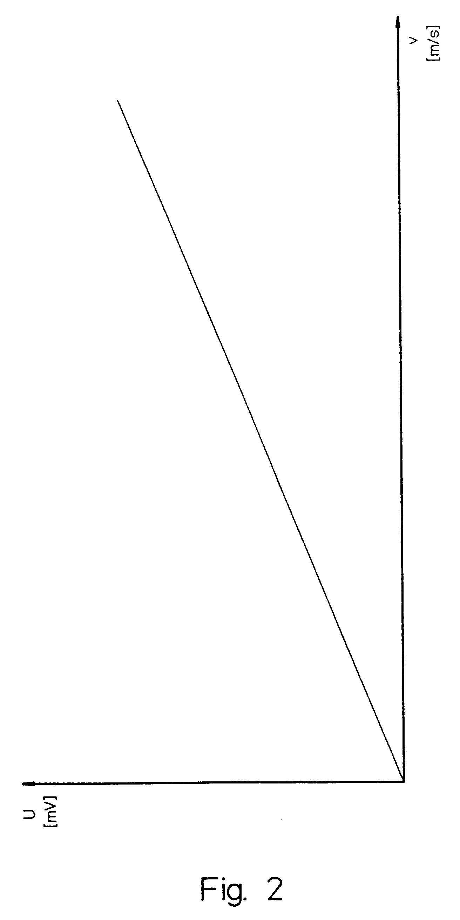

Bewegt sich aufgrund einer Fahrbahnunebenheit der Dämpferzylinder 1 relativ zur Kolbenstange 3 und damit zu der mit dieser in Wirkverbindung stehenden Sensorwicklung 7, induziert das magnetische Feld des Ringmagneten 5 eine Spannung in der Sensorwicklung, die aufgrund des geschlossenen magnetischen Kreises zwischen dem radial polarisierten Ringmagneten 5, der Kolbenstange 3 und dem die Sensorwicklung 7 tragenden Schutzrohr 4 proportional zur Relativgeschwindigkeit zwischen dem Dämpferzylinder 1 und dem nicht dargestellten Dämpfungskolben und damit zwischen Aufbau- und Radmasse des Fahrzeugs ist. Der Verlauf der induzierten Spannung U zur Relativgeschwindigkeit v ist in Fig. 2 dargestellt.

Bei einem Schwingungsdämpfer ohne Schutzrohr kann sich die Sensorwicklung 7 auf der Wandung des Dämpferzylinders 1 befinden, wobei unterschieden werden muß, ob die Sensorwicklung 7 sich auf der Innenwandung oder auf der Außenwandung des Dämpferzylinders befindet.

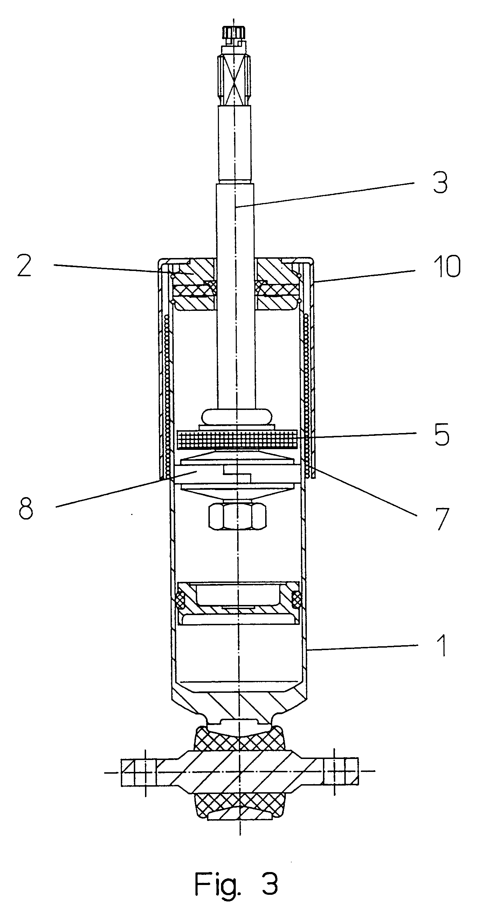

Liegt die Sensorwicklung 7 an der Außenwandung des Dämpferzylinders 1, wie in Fig. 3 gezeigt, muß dieser aus einem nichtmagnetisierbaren Material bestehen und die Sensorwicklung muß zum Schließen des magnetischen Kreises eine Umhüllung 10 aus ferromagnetischen Material aufweisen.

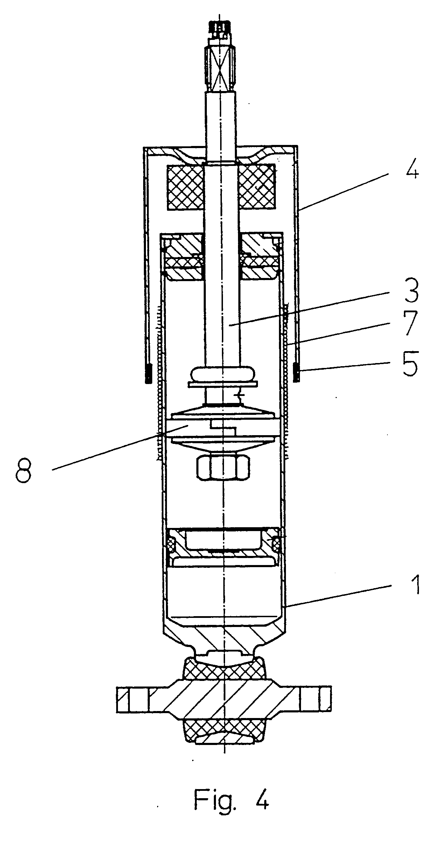

Fig. 4 zeigt einen Einrohrschwingungsdämpfer, bei dem die Sensorwicklung 7 an der Außenwandung des Dämpferzylinders 1 angeordnet ist. Der insbesondere als Ringmagnet ausgebildete, radial polarisierte Dauermagnet 5 befindet sich an der Innenwandung des aus ferromagnetischen Material bestehenden Schutzrohrs 4 und ist somit indirekt mit der Kolbenstange 3 verbunden. Aufgrund des gleichen Induktionsprinzips wird bei einer Relativbewegung zwischen dem Dämpferzylinder 1 und dem Dämpfungskolben 8 in der Sensorwicklung 7 eine der Relativgeschwindigkeit proportionale Spannung induziert, wobei bei einem aus nichtmagnetisierbarem Material bestehenden Dämpferzylinder 1 der magnetische Kreis über die Kolbenstange 3 und bei einem ferromagnetischen Dämpferzylinder über ihn selbst geschlossen wird.

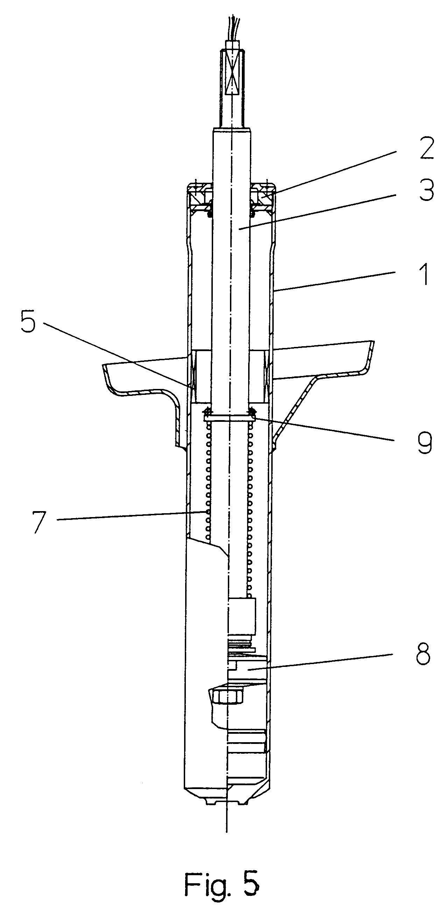

Fig. 5 zeigt die Sensoranordnung für ein Federbein. Bei einem Federbein kann die Sensorwicklung unterhalb des Zuganschlages 9 angeordnet werden und der Dauermagnet 5 an der Innenwandung des Dämpferzylinders 1. Der geschlossene magnetische Kreis für den durch den Dauermagneten 5 erzeugten Magnetfluß wird hier durch die Kolbenstange 3, den Dämpfungskolben 8 und die Wandung des Dämpferzylinders 1 gebildet, wobei alle Teile aus ferromagnetischen Material bestehen müssen.

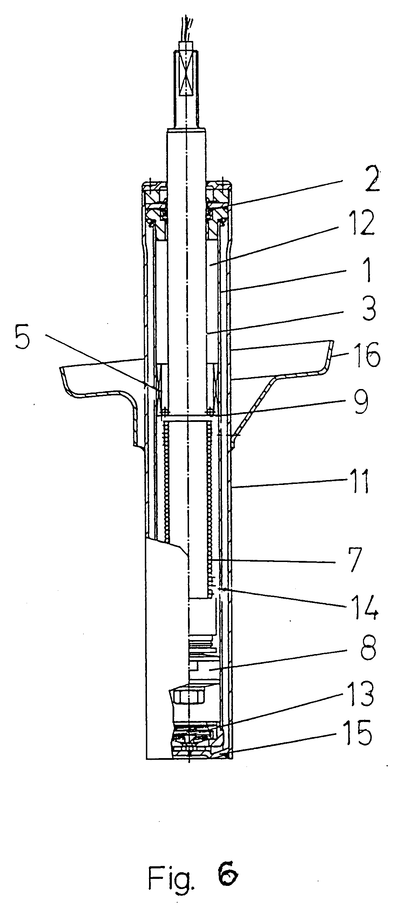

Ein nach dem Zweirohrprinzip arbeitendes, in Fig. 6 dargestelltes Federbein, besteht aus dem Arbeitsraum 12, der durch den Dämpferzylinder 1 gebildet wird und am unteren Ende durch das Bodenventil 13 und oben durch den Führungsverschluß 2 begrenzt wird. Im Führungsverschluß gleitet die Kolbenstange 3, die im Arbeitsraum 12 den Dämpfungskolben 8 aufnimmt. Der Dämpferzylinder 1 ist von einem Außenzylinder 11 umgeben, zwischen beiden befindet sich der Ausgleichsraum 14, der etwa bis auf halbe Höhe mit Öl gefüllt ist, während der Arbeitsraum 12 volle Ölfüllung aufweist. Der Außenzylinder 11 verbindet den Führungsverschluß 2 mit der das Bodenventil abstützenden Bodenkappe 15 und trägt den eine nichtdargestellte Schraubenfeder aufnehmenden Federteller 16. Zur Begrenzung des Rad-Ausfederungsweges trägt die Kolbenstange 3 einen Zuganschlag 9. Die als zylindrische Spule ausgebildete Sensorwicklung 7 umgibt die Kolbenstange 3 unterhalb des Zuganschlages 9.

Der die Sensorwicklung 7 umgebende, radial polarisierte als Ringmagnet ausgeführte Dauermagnet 5 ist an der Innenwandung des Dämpferzylinders 1 angeordnet. Bei dieser Anordnung des Relativgeschwindigkeitssensors wird der geschlossene magnetische Kreis über den Dämpferzylinder 1, die Kolbenstange 3, den Dämpfungskolben 8 oder den Führungsverschluß 2 gebildet.

Besteht der Dämpferzylinder 1 aus nichtmagnetisierbaren Material, kann der Dauermagnet 5 zwischen der Außenwandung des Dämpferzylinders 1 und der Innenwandung der Außenzylinders 11 angeordnet werden.

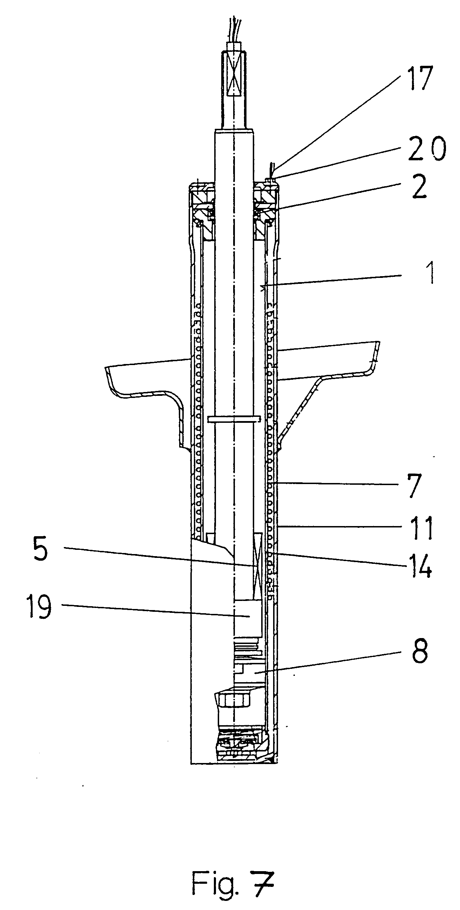

Fig. 7 zeigt ein Zweirohr-Federbein, bei dem der Relativgeschwindigkeitssensor entgegengesetzt aufgebaut ist. Die Sensorwicklung 7 liegt an der Außenwandung des aus nichtmagnetisierbaren Material bestehenden Dämpferzylinder 1, wobei denkbar wäre, die Sensorwicklung auch an der Innenwandung des Außenzylinders 11 anzuordnen. Die Anschlüsse 17 der Sensorwicklung wurden bei dieser Lösung im Ausgleichsraum 14 nach außen geführt und mit einem im Führungsverschluß 2 angeordneten mehrpoligen Stecker 20 verbunden. Der vorzugsweise als Ringmagnet ausgebildete, radial polarisierte Dauermagnet 5 umschließt die Kolbenstange 3 oberhalb des Bypassventils 19. Da der Außenzylinder 11 aus ferromagnetischen Material besteht, schließt sich der magnetische Kreis für das Magnetfeld des Dauermagneten 5 über die Kolbenstange 3, den Außenzylinder 11 und den Dämpfungskolben 8 oder den Führungsverschluß 2.

### Bezugszeichen

- 1: Dämpferzylinder
- 2: Führungsverschluß
- 3: Kolbenstange
- 4: Schutzrohr
- 5: Dauermagnet
- 6: Scheibe
- 7: Sensorwicklung
- 8: Dämpfungskolben
- 9: Zuganschlag
- 10: Umhüllung
- 11: Außenzylinder
- 12: Arbeitsraum
- 13: Bodenventil
- 14: Ausgleichsraum
- 15: Bodenkappe
- 16: Federteller
- 17: Anschlüsse
- 19: Bypassventil
- 20: Stecker
- U: induzierte Spannung
- v: Relativgeschwindigkeit

## Patentansprüche

1. Sensor zur Messung der Relativgeschwindigkeit und/oder der Stellung zwischen einem Dämpferzylinder (1) und einem mit der Kolbenstange (3) verbundenen, sich im Dämpferzylinder bewegenden Dämpfungskolben (8) eines Schwingungsdämpfers für Kraftfahrzeuge, bestehend aus einem Dauermagneten (5) und einer mit dem Dauermagneten zusammenwirkenden, als zylindrische Spule ausgebildeten Sensorwicklung (7), wobei der Dauermagnet (5) als Ringmagnet ausgebildet ist und direkt oder indirekt mit dem einen der sich relativ zueinander bewegenden Teile und die Sensorwicklung direkt oder indirekt mit dem anderen der sich relativ zueinander bewegenden Teile in Verbindung stehen, wobei das den Dauermagneten (5) tragende Teil und das die Sensorwicklung (7) tragende Teil für das Magnetfeld des Dauermagneten (5) einen geschlossenen magnetischen Kreis bilden, und bei dem der magnetische Fluß von der Sensorwicklung (7) geschnitten wird und in dieser eine Spannung induziert,
**dadurch gekennzeichnet,**
daß der Dauermagnet (5) in Anordnung zur Kolbenstange (3) radial polarisiert ist und die Kolbenstange (3) aus einem ferromagnetischen Material besteht.

2. Sensor nach Anspruch 1,
**dadurch gekennzeichnet,**
daß der Dauermagnet (5) aus ringförmig angeordneten Einzelmagneten besteht.

3. Sensor nach Anspruch 1,
**dadurch gekennzeichnet,**
daß der Dauermagnet (5) aus einem ringförmig geformten Magnetband besteht.

## Claims

1. Sensor for the purpose of measuring the relative velocity and/or the position between a damper cylinder (1) and a damper piston (8) of a vibration damper for motor vehicles which damper piston is connected to the piston rod (3) and moves in the damper cylinder (8), the said sensor consisting of a permanent magnet (5) and a sensor winding (7) which cooperates with the permanent magnet and is formed as a cylindrical coil, wherein the permanent magnet (5) is formed as a ring magnet and is connected in a direct or indirect manner to one of the parts which move relative to each other and the sensor winding is connected in a direct or indirect manner to another of the parts which move relative to each other, wherein the part supporting the permanent magnet (5) and the part supporting the sensor winding (7) form a complete magnetic circuit for the magnetic field of the permanent magnet (5), and wherein the magnetic flux is cut by the sensor winding (7) and a voltage is induced in said sensor winding, characterised in that the permanent magnet (5) is radially polarised in arrangement with respect to the piston rod (3) and the piston rod (3) consists of a ferromagnetic material.

2. Sensor according to claim 1, characterised in that the permanent magnet (5) consists of individual magnets disposed in a ring-shaped manner.

3. Sensor according to claim 1, characterised in that the permanent magnet (5) consists of a magnetic band which is formed in the shape of a ring.

## Revendications

1. Capteur pour la mesure de la position et/ou de la vitesse relative d'un cylindre d'amortissement (1) par rapport à un piston d'amortissement (8) relié à la tige de piston (3) et se déplaçant dans le cylindre d'amortissement d'un amortisseur pour véhicules à moteur, constitué d'un aimant permanent (5) et d'un bobinage de capteur (7) coopérant avec l'aimant permanent et configuré comme bobine cylindrique, dans lequel l'aimant permanent (5) est configuré comme aimant annulaire et est en liaison directe ou indirecte avec l'une des pièces se déplaçant l'une par rapport à l'autre, le bobinage de capteur étant en liaison directe ou indirecte avec l'autre des pièces se déplaçant l'une par rapport à l'autre, dans lequel la pièce portant l'aimant permanent (5) et la pièce portant le bobinage de capteur (7) forment un circuit magnétique fermé, pour le champ magnétique de l'aimant permanent (5), et dans lequel le flux magnétique est coupé par le bobinage de capteur (7) et induit dans celui-ci une tension,
caractérisé en ce que
l'aimant permanent (5) est polarisé radialement dans son agencement par rapport à la tige de piston (3), et la tige de piston (3) est réalisée en un matériau ferromagnétique.

2. Capteur selon la revendication 1, caractérisé en ce que l'aimant permanent (5) est constitué d'aimants individuels disposés en forme d'anneau.

3. Capteur selon la revendication 1, caractérisé en ce que l'aimant permanent (5) est constitué d'un feuillard aimanté façonné en forme d'anneau.
